# EUROPEAN PATENT SPECIFICATION

(11) **EP 3 060 038 B1**
(45) Date of publication and mention of the grant of the patent: **22.01.2020**
(21) Application number: 14799971.8
(22) Date of filing: 24.10.2014
(51) Int. Cl.: A01G 9/02

(54) **PROTECTIVE SEED CASE**
SCHUTZKASTEN FÜR SAMEN
BOÎTIER PROTECTEUR POUR SEMENCES

(30) Priority: 24.10.2013 GB 201318836
(43) Date of publication of application: 31.08.2016
(73) Proprietor: Green Digit Limited, Cowen Road Blaydon-on-Tyne NE21 5TW (GB)
(72) Inventor: SCOTT-HARDEN, Simon, Newcastle upon Tyne Tyne and Wear NE3 3DE (GB); ROBSON, Daniel, Tyne and Wear TS25 1BQ (GB)
(74) Representative: White, Nicholas John
(86) International application number: PCT/EP2014/072921
(87) International publication number: WO 2015/059305

(56) References cited:
- EP-A1- 2 412 230
- US-A- 3 515 036
- US-A- 4 167 911
- US-A- 4 333 265

## Description

### FIELD OF INVENTION

The present invention relates to a novel means of protecting and packaging seeds prior to planting and then aiding in the growth of the plant when in the ground by providing an ideal germination environment. In particular the disclosure provides a novel biodegradable hygroscopic water soluble case that opens up when there is a presence of moisture and/or water and when fully inserted into the ground at the normal to the surface of the ground, for example, seeds, bulbs and beans can be grown in hostile environments with a low moisture content without the need for any specific horticultural knowledge or specialist tools.

### BACKGROUND ART

It is widely recognised, eating healthy from a sustained food sources is a big deal today, and with supermarket scandals proving it is almost impossible to control the source of ingredients in our foods and obesity on the rise across the Western World. It is no secret we are being told to watch our diets and eat healthier. The most effective and cost efficient way to do so is to grow your own and grow from scratch and/or seed. Gardening is a complicated world, full of constant innovation and products most of which involve environmentally detrimental materials such as non-biodegradable plastics.

For beginners approaching the subject growing from seed is a daunting challenge, finding the right environment to grow is difficult and time consuming task. Planting the seed offers its own challenge to reach the correct germination depth leave enough space between each seed and not over water. Factors that can determine the plants growth and health, all of which are left up to mistakes by human error. Soil PH levels can vary, particularly when planting outdoors without the use of compost. This will inevitably affect the health of the seeds first shoot or radical which is easily burnt by harsh highly nutrient rich soil, leading to problems with the overall health of the plant later in its development. Inspired by old school guerrilla gardening techniques and its traditional ethos the protective packaging, delivery and growing system takes into account the materials used, its function, its waste and its aesthetic value and ensures it is environmentally friendly.

Currently (2013), over 60% of the UK's vegetables coming from overseas farms in Europe and 80% of the UK's consumed fruit coming from further afield. Yet one of the gardening industries biggest growth sectors is the 'grow your own' products. This emerging market sector, with over 21.2m UK gardens and a shortage of allotments. The £60m a year vegetable seed market is also increasing year on year but is lacking a simple product solution.

There is a need for a product that will encourage a younger audience into gardening and help children and people of a younger generation to understand a plants needs helping them to learn how to grow from seed. This will in turn change the dynamic of future generation's interest in gardening and growing form seed. There is a need to help in the education of food production.

The product provides window gardeners with everything they need to grow from seed, an easy and quick method of planting a full range of herbs form which they are able to trim and/or cut herbs and create inspired recipes.

A secondary initiative is the problem of plant regeneration during natural disasters, the protective packaging, delivery and growing system would help alleviate the victims through the increased production and consumption of nutritious and health-promoting crops. Geographically specific protective packaging, delivery and growing system would help the nutritional quality of diets in these effected areas.

A number of attempts have been made to address this.

Thus, for example, European Patent Number: 470 524 B1 describes a mat carrying seeds by means of a water soluble adhesive characterized in that the mat comprises a water-soluble nonwoven fabric and turf seeds are adhered to said nonwoven fabric by means of droplets of a foamed water-soluble adhesive.

US Publication Number: US20100263274 A1 describes various embodiments of an encapsulated seed article and a method for encapsulating a seed (s) to form an encapsulated seed (s) article. The encapsulated seed article may include a surface coating and may include an additive.

US Publication Number: US20110277381 A1 describes a biodegradable container for planting bulbs and may include a number of layers with pre-positioned bulbs for each layer. The container may include a partition to separate each layer. The container may include soil that holds the different bulbs in relative position, with or without the partition.

US Publication Number: US4769945 A describes unit of plant tissue which comprises a vessel having a water-soluble body and an interior covering of a water-insoluble material the vessel being charged with a hydrogel and meristematic tissue which has the ability to grow into an entire plant body through differentiation.

Publication Number WO2013123447 A1 describes a seed planting system that incorporates an outer shell, a plant growing or rooting media, seed(s), fertilizer, and a lid, as well as methods of using this planting system. US 3 515 036 A discloses a seed case comprising two casing sections interposed with a water soluble cement which is located between flanges of casing material around the central seed case. EP 2 412 230 A1 discloses a seed sticker comprising two casing sections interposed with a clay soil sheet which is located between the two casing sections which enclose one or more seeds.

The protective packaging, delivery and growing system allows for simple and easy planting of seeds and eliminates the need for gardening expertise and knowledge. The product is a waste free seed package alternative that acts as a seed delivery system designed to have both functional and environmental benefits.

### DISCLOSURE OF THE INVENTION

The present invention discloses a protective seed case comprising two casing sections interposed with a water soluble and/or hydrolytically degradable layer, which is only located between flanges of casing material around the central seed case enclosing one or more seeds.

The seed case has a multi-layer construction comprising a top casing adjacent to a water soluble and/or hydrolytically degradable layer preferably an adhesive layer, this layer being provided with a bottom layer.

The top casing is, in use, typically dome shaped and formed so as to accommodate one or more seeds. The top case could be hygroscopic, water soluble, biodegradable, hydrolytically degradable, oxidatively degradable, compostable and/or photodegradable, ideally made from a recycled material and once used can be recycled.

The top casing may be moulded into shape but could also be injection moulded, extruded, woven, pressed, die cut, stamped, blow moulded, formed, compressed, compacting, shaped, or combinations thereof. Ideally, it would be beneficial if the top casing is compatible with printing.

The top casing may be manufactured from paper pulp but also it could be manufactured from paper, fibreboard, cardboard, E flute cardboard or any single or multi layered fluted cardboard, hardboard, wood pulp, polymer, composite polymer, rubber, plastic, clay, mud, rooting media comprises soil, vermiculite, compost, manure, perlite, bark fines, wood shavings, mulch and/or combinations thereof. The materials used could also be nutrient enriched to aid growth, this could be with NPK Fertiliser for example. The thickness of the top casing could be in the range of 0.25mm - 10.00mm.

Preferably the top casing is manufactured from paper pulp and most preferable bleach free paper pulp.

The bottom layer could be hygroscopic, water soluble, biodegradable, hydrolytically degradable, oxidatively degradable, compostable and/or photodegradable, ideally made from a recycled material and once used can be recycled.

The bottom layer is, in use, the outer layer. The bottom layer could be die cut into shape but could also be injection moulded, extruded, moulded, woven, pressed, die cut, stamped, blow moulded, formed, compressed, compacting, shaped, or combinations thereof. Ideally, it would be beneficial if the bottom layer is compatible with printing.

The bottom layer may be manufactured from paper and/or cardboard, E flute cardboard or any single or multi layered fluted cardboard and/or combinations thereof but also it could be made from paper pulp, coir, peat, fibre board, hardboard, wood pulp, polymer, composite polymer, rubber, plastic, clay, mud, rooting media comprises soil, vermiculite, compost, manure, perlite, bark fines, wood shavings, mulch and/or combinations thereof. The materials used could also be nutrient enriched to aid growth, this could be with NPK Fertiliser for example. The thickness of the bottom layer could be in the range of 0.25mm - 10.00mm. The bottom layer preferably comprises Kraft paper as made by the Kraft process using wood pulp

The water soluble and or hydrolytically degradable layer may be made from any material, preferably natural material that may be dissolved in water or hydrolytically degraded. This layer may take the form of a thin film material that is bonded between cases sections (the top and bottom layers) and preferably is shaped to be of the same area and shape as the flange sections of the seed case. It is envisaged that this layer may be bonded to the seed case sections through use of an adhesive or other bonding means. It is also envisaged that this layer may be water soluble adhesive layer that may be hydrolytically degradable and/or soluble in water or when it comes into contact with material with high water content. The adhesive used might be a seed, flour, starch and/or a polyvinyl alcohol based adhesive. The water soluble adhesive layer could be pressure-sensitive adhesive. The water soluble adhesive layer could be water permeable and may be a natural adhesive or a synthetic adhesive containing either guar gum, pine tar, starch-based, molasses, rubber emulsions, vegetable oil, gelatin, seed flour-based, polyvinyl alcohol, wax, or combinations thereof.

The top casing and bottom layer should be designed in such a way that they are capable of being bonded together and a seed can be inserted and encased between the top case and bottom layer. The number of seeds can vary from just 1 to over 500 in one case. This would depend on the use and size of seeds, these seeds could be a vegetable, herb, flower, or a perennial plant. The embodiment could also include the use of beans and bulbs. If this was not to be used for plants then fertiliser, biochar, plant food, liquids, nutrients, food, liquids, powders, solids, medicines, chemicals, or soil could be encased within the top case and bottom layer. The number of beans and bulbs and other substances and materials could also vary depending on the requirement and size.

The shape of the protective packaging, delivery and growing system will take its lead from the application and use of the device and assist insertion into the growing medium, the growing medium could be a raised bed, container, indoor planter, planter, rocks, gravel, sand, clay, in ground native soil, or a tray.

The shape of the device might be shaped into an arrow head or a point, the device might have a specific flat insertion point or a flat insertion edge shape. The size and length of the protective packaging, delivery and growing system will mean that the depth of the seeds, beans and/or bulbs when in the ground can be controlled when it is inserted completely into the ground. That is, the top of the protective packaging, delivery and growing system is not showing above the surface of the ground, it is flush with the surface. The depth that the seeds, beans and/or bulbs that could be planted depends on the different plants that are grown and changes from species to species. The protective packaging, delivery and growing system could allow for controlled depth placement of the seeds, beans and/or bulbs within the ground from 1.00mm up to 300.00mm and this will be directly related to the shape and length of the device.

The protective packaging, delivery and growing system is designed so that there is a flange around the top case and bottom layer that is used for bonding, the flange could be between 0.50mm - 10.00mm wide or whatever allows for a successful bond of these two parts by the water soluble adhesive layer.

The protective packaging, delivery and growing system can also be attached to another device creating a collection of devices, these could be in a circular, rectangular, triangular, square, tape, double sided formation. The flange would be used to join the devices together in a particular formation, to provide separation when in this formation, it would be possible to create creases, perforations, scores or rip lines to aid separation for the user who would either rip or cut along these lines to separate the devices from the collection.

The protective packaging, delivery and growing system can be inserted into the ground in any orientation but preferably vertically, that means that the plane of the flange is at a normal to the surface of the ground. In this way, when the water soluble adhesive layer comes into contact with water moisture and/or water, it degrades allowing the top case and bottom layer to separate. The vertical nature of the device lends itself functionally, the roots and radicles grow downward and the shoots go upwards through the normal to the surface of the ground. The germination process can now start once moisture has been allowed to enter by the two halves that have now separated. The dry seed could stick to the moist inner of the protective packaging, delivery and growing system and begin to draw water in to begin its germination process. As the seed grows against the wall of the case it would begin to extend its root over the bumpy interior of case and form a micro trellis, allowing the root to extend down to the soil below with ease and form a good root system. The water stored within the protective packaging, delivery and growing system allows the seed to take only the amount it needs without the problems of over watering, the material would only absorb so much water before the fibres swell and become saturated. Over watering could create a water logged germination zone and extreme areas of damp will encourage mould and can often damage the root and/or radical of the seed through drowning. As the seed start to naturally germinate, the process of decomposition of the protective packaging, delivery and growing system begins, this is the process of breaking down the raw organic materials in to a finished compost. This process is known as aerobic decaying and it uses oxygen to accelerate the breakdown. The water soluble adhesive bonding the top case and bottom layer will have dissolved leaving a gap for the newly developed plant to emerge.

The top case and bottom layer is hygroscopic, water soluble, biodegradable, hydrolytically degradable, oxidatively degradable, compostable and/or photodegradable. This means that once the cases have separated, they will then degrade themselves into the ground within approximately 2-3 weeks. These cases can also be enriched with nutrients that can be released and in so, aid the development of the growing plant. The protective packaging, delivery and growing system should be planted in an area where is can receive sufficient light and a water source for the establishment of a plant.

The novel protective packaging, delivery and growing system is a waste free packaging alternative that acts as a seed delivery system designed to have both functional and environmental benefits. The protective packaging, delivery and growing system could be a functional tool for supporting seed germination by placing the seed in an ideal environment climate that allows for controlled conditions which can be utilised to gain good germination yield for even first time novice gardeners. The device would produce no waste and could be completely recyclable or biodegradable and completely chemical neutral, the device should have no bleaches or notably detrimental chemicals involved in its manufacture.

Unlike other seed packaging available on the market the protective packaging, delivery and growing system would have no plastic in its manufacture and offer the user a unique, tactile and audible approach to gardening and/or planting from seed. The seeds from within the cases could be clearly be heard rattling when the device is shaken.

In one embodiment, the protective packaging, delivery and growing system (individual seed case) is a circular formation in the shape of a seed wheel; this is attached to the main backing board that could display all the product information. The seed wheel could be broken from the main backing card and then broken up into individual seed cases which are pushed into the ground without the need for use of tools, the shape acts as a dibber and helps to push through the lose earth or soil.

Once in the ground, the individual seed cases would create the ideal controlled environment for the seeds to begin their germination once they have opened up and allowed moisture to come into contact with the seeds. The individual seed cases themselves absorb water and also deliver moisture straight to the seed without drowning it, the system could use less water than conventional methods of growing from seed. The warm and moist environment could help to aid root growth and help the seed to break through the surface of the ground.

The shape of the seed wheel which could be made from virgin pulp, recycled, biodegradable, recyclable and environmentally friendly paper pulp and which could be mixed with a nutrient solution and shaped like a disk with 8 to 12 individual seed cases. The back could be flat and have a clear blank surface on which to print important information.

The individual seed cases in this embodiment could be surrounded by a perforated line cut into the flange area which could be cut, torn, ripped or broken in order to separate the individual seed cases from one another. Once separated, each individual seed case could have a larger rounded end and a thinner pointed end, the thinner pointed end would be intended to be used as a dibber and/or tool for planting because of the shape it would make it easier to push this pointed end into soil, mud, ground, dirt, compost and/or earth.

Once pushed, screwed, place and/or buried in the soil, mud, ground, dirt, compost and/or earth the individual seed cases could absorb any moisture, water, vapour or H2O from the surrounding area or by the watering process and deliver, feed and/or transport firstly to the water soluble adhesive layer and then to the top case and bottom layer. The top case and bottom layer would open up and moisture releases, activates and/or dilutes the dormant nutrient solution and feeds the seed by delivering, transporting direct and/or straight to the seed. This method of delivering nutrients to the seeds avoids damage to the seeds root and/or radicle by over exposure to high PH levels.

The individual seed cases would eventually completely disappear and leave a composted natural nutrient source in which the plant will now thrive. During the decomposition process, the waste would begin to release a quantity of carbon dioxide which will benefit the plants growth.

The use of the individual seed cases, in this embodiment, in dry substrates and its capability to hold and/or store as well as gather moisture form dry environments could allow for its use in countries, areas and environments where rain water, ground water and/or fresh water is scarce and not often freely available. The individual seed cases could protect the seed from harsh dry temperate climates and accelerate its growth. This could be hugely useful in poverty stricken countries where food is scarce and growing of food from seed is difficult.

The types of plant seeds that may be included within this device may include tomato, cantaloupe, honey dew, jalapeno pepper, sweet pepper, straight cucumber, courgette, watermelon, pumpkin, basil, cilantro, dill, thyme, beans, lettuce, spinach, snap pea, oregano, thyme, mint, radish, eggplant, broccoli, collards, cabbage, leek, zinnia, sunflower, marigold, carrot, corn, beet, parsnip, turnip, swiss chard, fennel, marjoram, or combinations thereof.

The invention will now be referred to by the following figures 1-12, which show/represent various forms/states and designs, the invention could take and in which
Figure 1 is a schematic representation of the 8 seed cases in circular formation;
Figure 2 is a schematic representation of the 8 seed cases in circular formation with a single seed case removed;
Figure 3 is a schematic representation of the single seed case;
Figure 4 is a cross-section of the seed case of the invention showing the position of the seed;
Figure 5 is a cross-section of the seed case of the invention provided with an adhesive layer;
Figure 6 is a schematic representation of the underside of 8 seed cases in circular formation showing the cavities inside for the seeds to be positioned;
Figure 7 is a schematic representation of the single seed case opening up;
Figure 8 is a schematic representation of a square shape with 16 seed cases therein;
Figure 9 is a schematic representation of a tape shape with 8 seed cases therein;
Figure 10 is a schematic representation of a double sided shape with 8 seed cases therein;
Figure 11 is a schematic representation of a rectangle shape with 6 seed cases therein;
Figure 12 is a schematic representation of a flower shape with 8 seed cases therein;
Figure 13 is a schematic representation of the single seed case opened up;
Figure 14 is a cross-section of the seed case of the invention showing the position of the seed in the vertical position;
Figure 15 is a schematic representation of the single seed case with a plant that has rooted and also produced a stem, shoots and leaves;

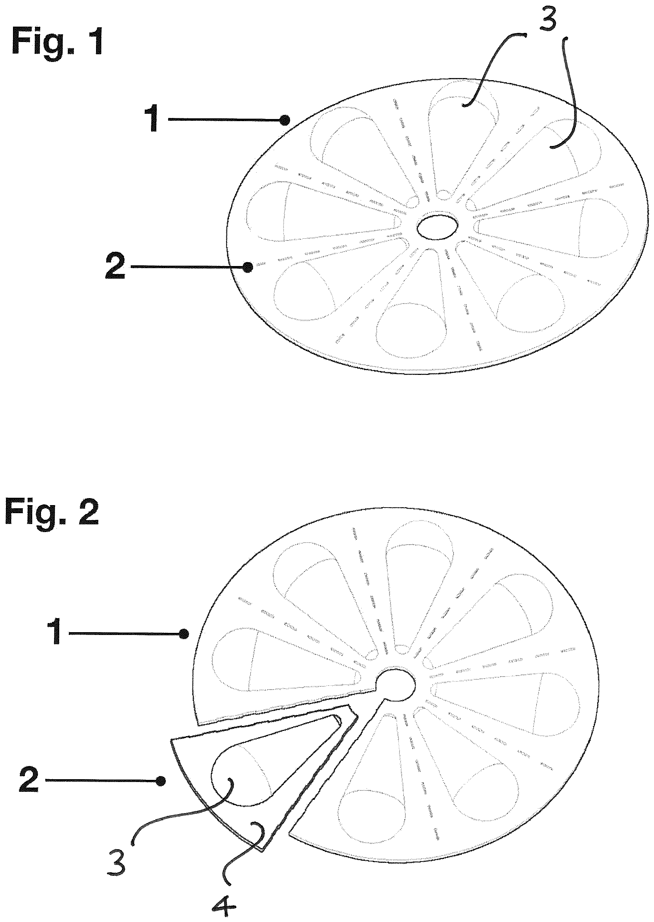

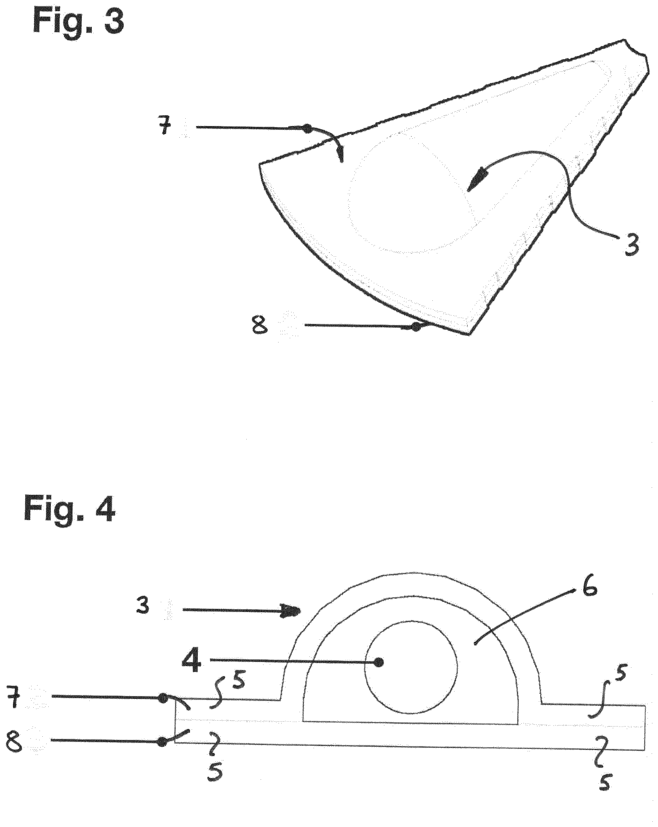

With reference to Figure 1 the seed cases (3) are arranged in a circular seed pack formation (1) as a suitable packaging arrangement for use as for example point of sale. The individual seed cases (3) are separated from each other via tearing or cutting perforations (2). With reference to Figures 2 and 3, an individual seed case (3) is shown separated from the circular seed pack formation (1). The flanges (5) associated with the seed case (3) can clearly be seen. In Figure 3 there is shown a biodegradable hygroscopic water soluble top case (7) bonded to a biodegradable hygroscopic water soluble bottom layer (8) (the water soluble adhesive bonding layer is not shown).

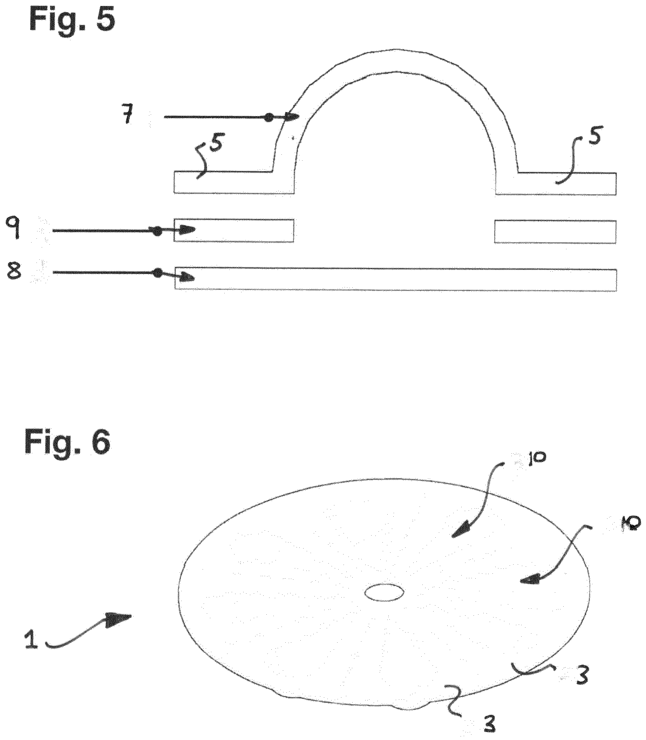

With reference to Figure 4, the biodegradable hygroscopic water soluble top case section (7) of the seed case (3) is bonded to the biodegradable hygroscopic water soluble bottom layer (8) at flanges (5). A seed (4) is located within the interior (6) of the seed case (3). The water soluble adhesive bonding layer is not shown but is illustrated as (9) in Figure 5, where it can be seen that the dimensions of this layer (9) are coincidental with those of the flange (5) of the top layer (7).

**Figure 6****:** Shows the internal cavities (10) of the circular seed package formation (1) with 8 seed cases (3) in a circular formation;

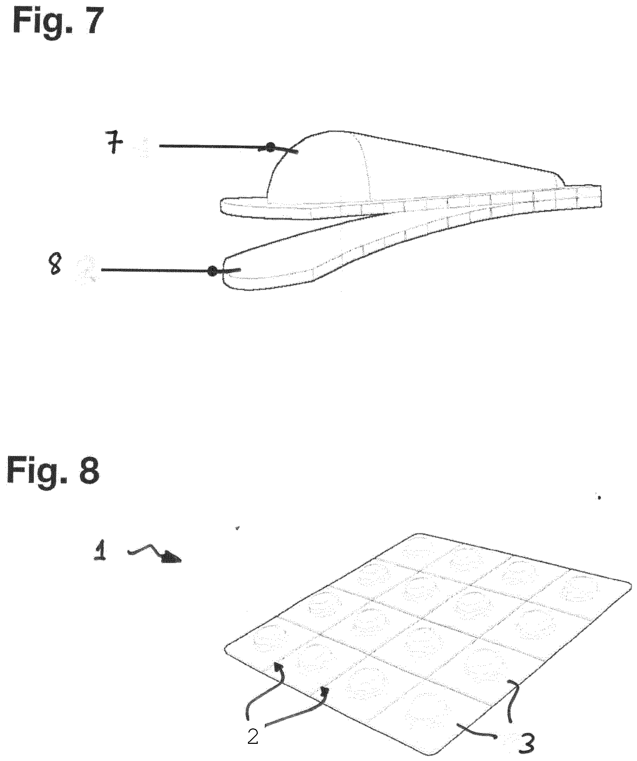

**Figure 7****:** A seed case comprises a biodegradable hygroscopic water soluble top casing (7) with biodegradable hygroscopic water soluble bottom layer (8) opening up as the water soluble adhesive (not shown) fails;

**Figure 8****:** Shows how 16 formed seed cases (3) can be arranged in a square seed pack formation (1) with tear or cut lines (2) aiding separation;

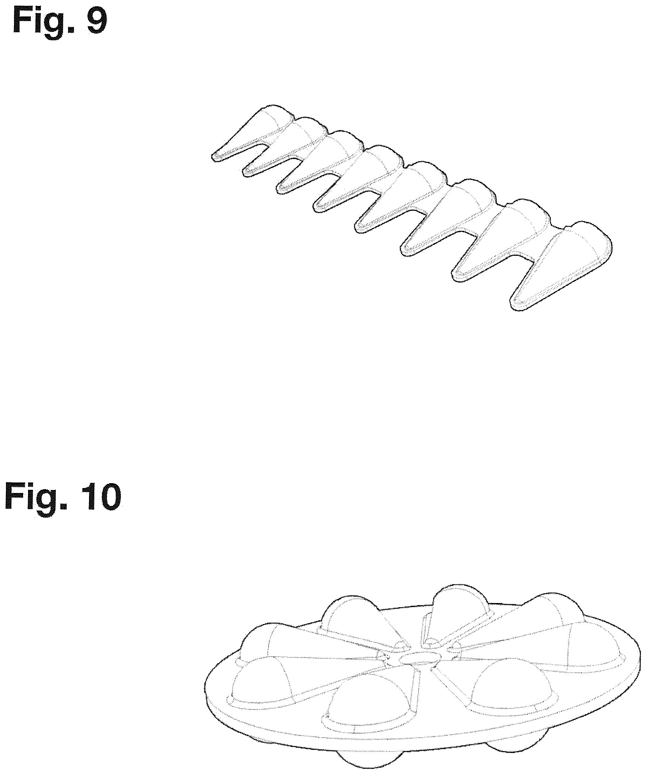

**Figure 9****:** Shows how 8 formed seed cases can be arranged in a tape formation with tear or cut lines aiding separation;

**Figure 10****:** Shows how 8 formed seed cases can be arranged in a double sided circular formation;

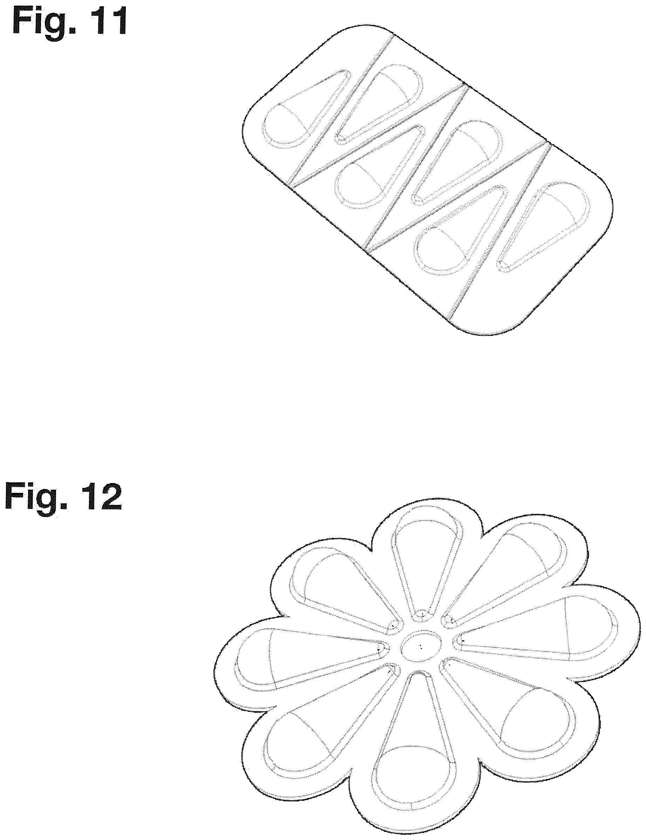

**Figure 11****:** Shows how 6 formed seed cases can be arranged in a rectangle formation with tear or cut lines aiding separation;

**Figure 12****:** Shows how 8 formed seed cases can be arranged in a flower formation;

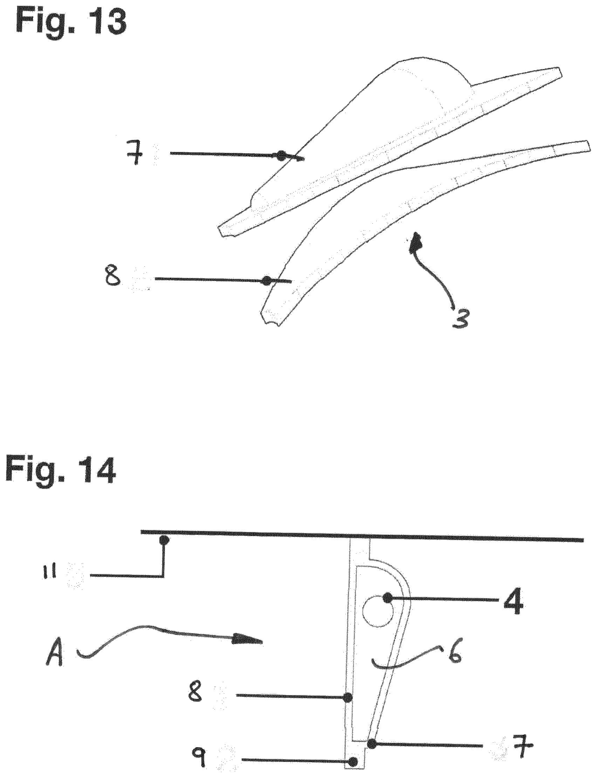

**Figure 13****:** A seed case (3) comprises a biodegradable hygroscopic water soluble top casing (7) with biodegradable hygroscopic water soluble bottom layer (8) that has separated from the biodegradable hygroscopic water soluble top casing (7). The water soluble adhesive that bonded these two layers has dissolved.

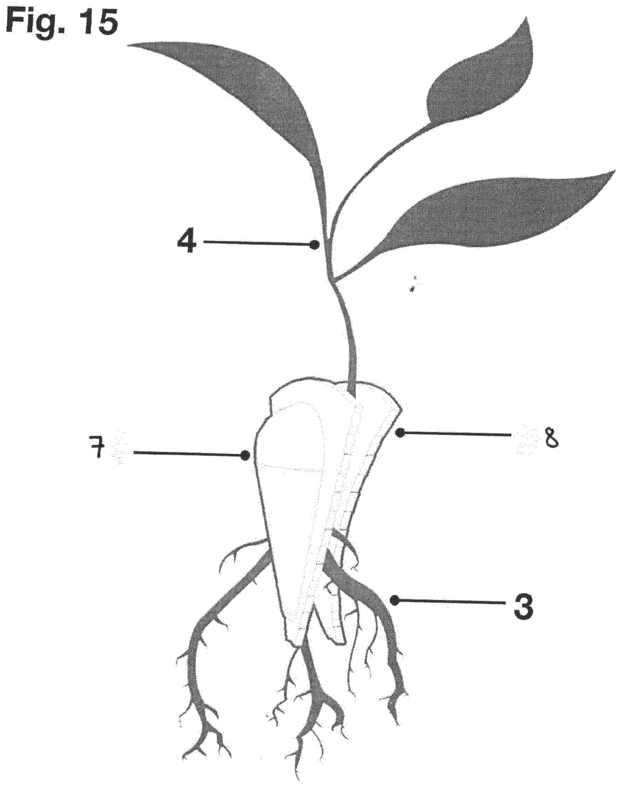

**Figure 14** **shows a** seed case (A) in the vertical (normal to the surface of the ground (11) position comprises a biodegradable hygroscopic water soluble top casing (7) adjacent to a water soluble adhesive layer (9) with biodegradable hygroscopic water soluble bottom layer (8) with an individual seed (4) inside that is fully submerged beneath the growing medium (11). In this positon the seed (4) is at the desired and optimum location for germination. The layers 7 and 8 may absorb water from the surrounding growing medium (11) and effectively control the passage of water into the interior (6) of the seed case (A). This ensure that the seed (4) is not water logged and is able to germinate in an optimum environment. On germination roots and shoots are produced, which are able to pass out of the protective seed case (A) as the water soluble adhesive layer (9) dissolves as shown in Figure 15.

**Figure 15****:** A seed case in the vertical (normal to the surface of the ground) position comprises a biodegradable hygroscopic water soluble top casing (7) and the biodegradable hygroscopic water soluble bottom layer (8) with a plant that has rooted and also produced a stem, shoots and leaves;

This protective case and seed case and bottom layer may be made from a paper, cardboard, wood pulp, polymer, composite polymer, rubber, plastic, paper pulp, clay, mud, rooting media comprises soil, coir, vermiculite, compost, perlite, bark fines, peat, wood shavings, mulch, or combinations thereof which may be hydrolytically degradable, oxidatively degradable, biodegradable, compostable or photodegradable and or injection moulded, extruded, woven, pressed, die cut, stamped, blow moulded, formed, compressed, shaped, or combinations thereof.

All of the features disclosed in this specification for each and every embodiment (including any accompanying claims, abstract and drawings), and/or all of the steps of any method or process so disclosed, may be combined in any combination, except combinations where at least some of such features and/or steps are mutually exclusive.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise. Features, integers, characteristics, compounds described in conjunction with a particular aspect, embodiment or example of the invention are to be understood to be applicable to any other aspect, embodiment or example described herein in the specification and drawings unless incompatible therewith.

## Claims

1. A protective seed case (3) comprising two casing sections (7, 8) interposed with a water soluble and/or hydrolytically degradable layer (9) which is only located between flanges (5) of casing material around the central seed case (3) which encloses one or more seeds (4).

2. A protective seed case (3) according to claim 1, wherein the casing sections (7,8) and the water soluble and/or hydrolytically degradable layer (9) are bonded to each other via a water soluble adhesive.

3. A protective seed case (3) according to claim 1, wherein the casing sections (7,8) comprise different materials or combinations of materials.

4. A protective seed case (3) according to claim 1 wherein at least one casing section (7,8) comprises materials that comprise one or more of the following properties: hygroscopic; water soluble; biodegradable; hydrolytically degradable; oxidatively degradable; compostable; photodegradable and any combination of these properties.

5. A protective seed case (3) according to claim 1, wherein the case (3) comprises a first casing section (8) that is substantially planar and a second casing section (7) that is non-planar and wherein the non-planar shape is moulded, injection moulded, extruded, woven, pressed, die cut, stamped, blow moulded, formed, compressed, compacting, shaped, or combinations thereof.

6. A protective seed case (3) according to claim 1, wherein at least one case section (7,8) is manufactured from material comprising one or more of: paper pulp, paper, fibreboard, cardboard, E flute cardboard or any single or multi layered fluted cardboard, hardboard, wood pulp, polymer, composite polymer, rubber, plastic, clay, mud, rooting media comprising soil, vermiculite, compost, manure, perlite, bark fines, wood shavings, mulch and/or any combinations thereof.

7. A protective seed case (3) according to claim 1 wherein one or more of the case section material comprises nutrients to aid seed growth.

8. A protective seed case (3) according to claim 1, wherein the water soluble and/or hydrolytically degradable layer (9) is water soluble or degradable in contact with a water and/or material with a high water content.

9. A protective seed case (3) according to claim 1, wherein the water soluble layer (9) and/or hydrolytically degradable layer (9) is an adhesive.

10. A protective seed case (3) according to claim 2, wherein the adhesive is seed based or flour based or starch based or polyvinyl alcohol based adhesive or any combinations of these adhesives.

11. A protective seed case (3) according to claim 2, wherein the water soluble adhesive is a natural adhesive, synthetic adhesive or mixtures thereof comprising one or more adhesives based on guar gum, pine tar, starch, molasses, rubber emulsions, vegetable oil, gelatin, seed flour, polyvinyl alcohol or dextrin.

12. A protective seed case (3) according to claim 1, wherein the case material is water absorbent and allows water to pass into the interior (6) of the case (3) and contact the seed therein.

13. A protective seed case (3) as claimed in claim 1, wherein the seeds (4) that may be included within the case (3) are tomato, cantaloupe, honey dew, jalapeno pepper, sweet pepper, straight cucumber, courgette, watermelon, pumpkin, basil, cilantro, dill, thyme, beans, lettuce, spinach, snap pea, oregano, thyme, mint, radish, eggplant, broccoli, collards, cabbage, leek, zinnia, sunflower, marigold, carrot, corn, beet, parsnip, turnip, swiss chard, fennel, marjoram, or combinations thereof.

14. A protective seed case (3) according to claim 1, wherein the water soluble and/or hydrolytically degradable layer (9), in the presence of water moisture, degrades when fully inserted into the ground and normal to the surface of the ground, allowing the casing sections (7,8) to become unattached from each other allowing the seed (4) to grow from within.

## Patentansprüche

1. Schutzkasten für Samen (3), umfassend zwei Kastenteile (7, 8) mit dazwischen gelegter wasserlöslicher und/oder hydrolytisch abbaubarer Schicht (9), die nur zwischen Bünden (5) des Kastenmaterials um den mittleren Samenkasten (3) herum, der einen oder mehrere Samen (4) einschließt, positioniert ist.

2. Schutzkasten für Samen (3) nach Anspruch 1, wobei die Kastenteile (7, 8) und die wasserlösliche und/oder hydrolytisch abbaubare Schicht (9) über einen wasserlöslichen Klebstoff aneinander gebunden sind.

3. Schutzkasten für Samen (3) nach Anspruch 1, wobei die Kastenteile (7, 8) unterschiedliche Materialien oder Kombinationen von Materialien umfassen.

4. Schutzkasten für Samen (3) nach Anspruch 1, wobei mindestens ein Gehäuseteil (7, 8) Materialien umfasst, die eine oder mehrere der nachstehenden Eigenschaften umfassen: hygroskopisch; wasserlöslich; biologisch abbaubar; hydrolytisch abbaubar; oxidativ abbaubar; kompostierbar; fotochemisch abbaubar und jede Kombination dieser Eigenschaften.

5. Schutzkasten für Samen (3) nach Anspruch 1, wobei der Kasten (3) einen ersten Gehäuseteil (8) umfasst, der im Wesentlichen plan ist, und einen zweiten Gehäuseteil (7), der nicht plan ist, und
wobei die nicht plane Form in hergestellt, spritzgeformt, stranggepresst, gewoben, gepresst, gestanzt, geprägt, geblasen, geformt, komprimiert, kompaktiert, gestaltet oder Kombinationen daraus ist.

6. Schutzkasten für Samen (3) nach Anspruch 1, wobei mindestens ein Gehäuseteil (7, 8) aus Material hergestellt ist, umfassend eines oder mehrere von: Papierzellstoff, Papier, Faserplatte, Karton, Feinstwellkarton oder jeden einfach- oder mehrlagigen Wellkarton, Hartfaserplatte, Holzzellstoff, Polymer, Verbundpolymer, Kautschuk, Plastik, Ton, Mudde, Bewurzelungsmittel, umfassend Erde, Vermiculit, Kompost, Dünger, Perlit, zerkleinerte Rinde, Holzschnitzel, Mulch und/oder jegliche Kombinationen daraus.

7. Schutzkasten für Samen (3) nach Anspruch 1, wobei einer oder mehrere der Gehäuseteilmaterialien Nährstoffe umfassen, um das Samenwachstum zu unterstützen.

8. Schutzkasten für Samen (3) nach Anspruch 1, wobei die wasserlösliche und/oder hydrolytisch abbaubare Schicht (9) in Kontakt mit Wasser und/oder mit einem Material mit hohem Wassergehalt wasserlöslich oder abbaubar ist.

9. Schutzkasten für Samen (3) nach Anspruch 1, wobei die wasserlösliche Schicht (9) und/oder die hydrolytisch abbaubare Schicht (9) ein Klebstoff ist.

10. Schutzkasten für Samen (3) nach Anspruch 2, wobei der Klebstoff auf Samen oder auf Mehl oder auf Stärke oder auf Klebstoff auf Polyvinylalkoholgrundlage oder jeglichen Kombinationen dieser Klebestoffe basiert.

11. Schutzkasten für Samen (3) nach Anspruch 2, wobei der wasserlösliche Klebstoff ein natürlicher Klebstoff, synthetischer Klebstoff oder Mischungen daraus sind, umfassend einen oder mehrere Klebestoffe auf der Grundlage von Guargummi, Kiefernholzteer, Stärke, Molassen, Kautschukemulsionen, Pflanzenöl, Gelatine, Saatmehl, Polyvinylalkohol oder Dextrin.

12. Schutzkasten für Samen (3) nach Anspruch 1, wobei das Kastenmaterial wasserabsorbierend ist und es zulässt, dass Wasser in das Innere (6) des Kastens (3) eintritt und mit den Samen darin in Kontakt kommt.

13. Schutzkasten für Samen (3) nach Anspruch 1, wobei die Samen (4), die im Kasten (3) enthalten sein können, Tomaten, Kantalupen, Honigmelonen, Jalapeño-Paprika, Gemüsepaprika, gerade Gurken, Zucchini, Wassermelonen, Kürbisse, Basilikum, Koriander, Dill, Thymian, Bohnen, Kopfsalat, Spinat, Zuckererbsen, Oregano, Thymian, Minze, Rettich, Auberginen, Broccoli, Kohl, Weißkohl, Lauch, Zinnie, Sonnenblumen, Ringelblumen, Karotten, Mais, Rüben, Pastinak, weiße Rüben, Mangold, Fenchel, Majoran oder Kombinationen daraus sind.

14. Schutzkasten für Samen (3) nach Anspruch 1, wobei die wasserlösliche und/oder hydrolytisch abbaubare Schicht (9) in Anwesenheit von Wasserfeuchtigkeit abgebaut wird, wenn sie vollständig in den Boden und senkrecht normal zur Oberfläche des Bodens eingesetzt wird und zulässt, dass sich die Kastenteile (7, 8) voneinander ablösen und es zulassen, dass der Samen (4) von darin aus wächst.

## Revendications

1. Boîtier protecteur de semences (3) comprenant deux sections de boîtier (7, 8) intercalées avec une couche hydrosoluble et/ou hydrolytiquement dégradable (9), qui est uniquement située entre des rebords (5) du matériau de boîtier autour du boîtier de semences central (3) qui renferme une ou plusieurs semences (4).

2. Boîtier protecteur de semences (3) selon la revendication 1, dans lequel les sections de boîtier (7, 8) et la couche hydrosoluble et/ou hydrolytiquement dégradable (9) sont liées les unes aux autres par le biais d'un adhésif hydrosoluble.

3. Boîtier protecteur de semences (3) selon la revendication 1, dans lequel les sections de boîtier (7, 8) comprennent différents matériaux ou des combinaisons de matériaux.

4. Boîtier protecteur de semences (3) selon la revendication 1 dans lequel au moins une section de boîtier (7, 8) comprend des matériaux qui comprennent une ou plusieurs des propriétés suivantes : hygroscopique ; hydrosoluble ; biodégradable ; hydrolytiquement dégradable, dégradable par oxydation ; compostable ; photodégradable et toute combinaison de ces propriétés.

5. Boîtier protecteur de semences (3) selon la revendication 1, dans lequel le boîtier (3) comprend une première section de boîtier (8) qui est sensiblement plane et une seconde section de boîtier (7) qui n'est pas plane et dans lequel la forme non plane est moulée, moulée par injection, extrudée, tissée, pressée, découpée à l'emporte-pièce, estampillée, moulée par soufflage, formée, compressée, compactée, façonnée, ou des combinaisons de ceux-ci.

6. Boîtier protecteur de semences (3) selon la revendication 1, dans lequel au moins une section de boîtier (7, 8) est fabriquée à partir d'un matériau comprenant un ou plusieurs éléments parmi : pâte à papier, papier, panneau de fibres, carton, carton de type ondulation E ou tout carton à cannelures mono- ou multicouche, panneau dur, pâte de bois, polymère, polymère composite, caoutchouc, plastique, argile, boue, milieux d'enracinement comprenant terre, vermiculite, compost, engrais, perlite, fines d'écorce, copeaux de bois, paillage et/ou toute combinaison de ceux-ci.

7. Boîtier protecteur de semences (3) selon la revendication 1 dans lequel un ou plusieurs matériaux de section de boîtier comprennent des nutriments pour favoriser la croissance des semences.

8. Boîtier protecteur de semences (3) selon la revendication 1, dans lequel la couche hydrosoluble et/ou hydrolytiquement dégradable (9) est hydrosoluble ou dégradable au contact de l'eau et/ou d'un matériau dont la teneur en eau est élevée.

9. Boîtier protecteur de semences (3) selon la revendication 1, dans lequel la couche hydrosoluble et/ou hydrolytiquement dégradable (9) est un adhésif.

10. Boîtier protecteur de semences (3) selon la revendication 2, dans lequel l'adhésif est un adhésif à base de semences ou à base de farine ou à base d'amidon ou à base d'alcool polyvinylique ou toute combinaison de ces adhésifs.

11. Boîtier protecteur de semences (3) selon la revendication 2, dans lequel l'adhésif hydrosoluble est un adhésif naturel, adhésive synthétique ou des mélanges de ceux-ci comprenant un ou plusieurs adhésifs à base de gomme de guar, goudron de pin, amidon, mélasse, émulsions de caoutchouc, huile végétale, gélatine, farine de semences, alcool polyvinylique ou dextrine.

12. Boîtier protecteur de semences (3) selon la revendication 1, dans lequel le matériau de boîtier est hydro-absorbant et permet le passage de l'eau à l'intérieur (6) du boîtier (3) et entre en contact avec la semence qui se trouve à l'intérieur de celui-ci.

13. Boîtier protecteur de semences (3) selon la revendication 1, dans lequel les semences (4) qui peuvent être incluses à l'intérieur du boîtier (3) sont de tomate, cantaloup, melon Honeydew, piment jalapeño, poivron, concombre droit, courgette, pastèque, potiron, basilic, coriandre, aneth, thym, haricots, laitue, épinards, pois croquants, origan, thym, menthe, radis, aubergine, brocoli, chou cavalier, chou, poireau, zinnia, tournesol, souci, carotte, maïs, betterave, panais, navet, bette à carde, fenouil, marjolaine, ou des combinaisons de ceux-ci.

14. Boîtier protecteur de semences (3) selon la revendication 1, dans lequel la couche hydrosoluble et/ou hydrolytiquement dégradable (9), en présence d'humidité, se dégrade lorsqu'elle est entièrement introduite dans le sol et est perpendiculaire à la surface du sol, permettant aux sections de boîtier (7, 8) d'être non attachées les unes aux autres et permettant à la semence (4) de pousser de l'intérieur.
